# EUROPEAN PATENT SPECIFICATION

(11) **EP 2 020 821 B1**
(45) Date of publication and mention of the grant of the patent: **28.12.2016**
(21) Application number: 07720818.9
(22) Date of filing: 16.04.2007
(51) Int. Cl.: H04W 74/08

(54) **A RANDOM ACCESS CONTROL METHOD BASED ON TD-SCDMA SYSTEM**
DIREKTZUGRIFFS-STEUERVERFAHREN AUF DER BASIS EINES TD-SCDMA-SYSTEMS
PROCÉDÉ DE COMMANDE D'ACCÈS ALÉATOIRE FONDÉ SUR UN SYSTÈME TD-SCDMA

(30) Priority: 30.04.2006 CN 200610011846
(43) Date of publication of application: 04.02.2009
(73) Proprietor: ZTE Corporation, Shenzhen, Guangdong 518057 (CN)
(72) Inventor: ZHANG, Yincheng ZTE Plaza, Keji Road South, Shenzhen Guangdong 518057 (CN); CHEN, Hui, Nanshan District Shenzhen Guangdong 518057 (CN); MA, Zhifeng, Nanshan District Shenzhen Guangdong 518057 (CN)
(74) Representative: Ilgart, Jean-Christophe
(86) International application number: PCT/CN2007/001245
(87) International publication number: WO 2007/128204

(56) References cited:
- CN-A- 1 414 727
- CN-A- 1 464 754
- CN-A- 1 741 630
- US-A1- 2002 170 013
- US-A1- 2005 266 846
- "3rd Generation Partnership Project; Technical Specification Group Radio Access Network; Feasibility study on uplink enhancements for UTRA TDD; (Release 6)", 3GPP STANDARD; 3GPP TR 25.804, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V6.1.0, 1 March 2006 (2006-03-01), pages 1-79, XP050369124,
- "3rd Generation Partnership Project; Technical Specification Group Radio Access Network; FDD Enhanced Uplink; Overall description; Stage 2 (Release 6)", 3GPP STANDARD; 3GPP TS 25.309, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V6.1.0, 1 December 2004 (2004-12-01), pages 1-26, XP050367617,

## Description

### TECHNICAL FIELD

The present invention relates to the field of wireless communication system, more specifically relates to a control method of random access when there are plural random access requests in TD-SCDMA wireless communication system.

### BACKGROUND OF THE INVENTION

TD-SCDMA (Time Division-Synchronous Code Division Multiple Access) wireless communication system is one of the standards of the 3rd Generation mobile communication system normatively defined by 3GPP (3rd Generation Partnership Project). In the 3GPP standards (Release 6), there's only one random access request in TD-SCDMA system, i.e. the random access process controlled by MAC-c/sh entities of the MAC (Media Access Control) layer along with the physical layer, which controls the transport of transport channel RACH (Random Access Channel) and physical channel PRACH (Physical Random Access Channel). PRACH and RACH are the only transport channel resource and physical channel resource of random access in the current TD-SCDMA system, and PRACH physical channel carries RACH transport channel.

In the current 3GPP TD-SCDMA standards, the sending of the transport channel RACH is controlled by MAC-c/sh entities in the MAC lays to control random access, the detailed control method of which can be referred to the 3GPP standard 25.224 v6.6.0.

In the current 3GPP TD-SCDMA standards, the access control of the physical layer is realized through the random access process of the physical layer. In TD-SCDMA wireless communication system, random access process includes uplink synchronization process. The system configures resources such as UpPTS (Uplink Pilot Time Slot), SYNC_UL (Uplink SYNC codes) and the physical channel FRACH (Fast Physical Access Channel) for feeding back uplink synchronization adjusting information, which were used for uplink synchronization and random access control to control the sending of the only physical random access resource - physical channel PRACH, the detailed control method of which can be referred to the 3GPP standard 25.224 v6.6.0.

With the unceasingly development of communication technologies and increase of service requirements, more kinds of random access request, more resources of random access transport channel and/or physical channel may be introduced in TD-SCDMA system, and it is possible that the corresponding control method of random access needs to be introduced as well.

3GPP TR 25.804 v6.1.0 discloses a method for feasibility study on uplink enhancements for UTRA TDD; 3GPP TS 25.309 v6.1.0 discloses a method for FDD Enhanced Uplink; US20020170013 discloses a method and system for implicit user equipment identification; and US20050266846A1 discloses a method and apparatus for providing enhanced messages on common control channel in wireless communication system.

### BRIEF SUMMARY OF THE INVENTION

The present invention provides a control method of random access based on TD-SCDMA system enabling TD-SCDMA system to support plural kinds of the random access requests when there are the plural kinds of random access requests.

To achieve the above object, the present invention provides a control method of random access based on TD-SCDMA system, as defined in appended claim 1.

In the control method of random access based on the TD-SCDMA system, the physical layer access requests comprises at least information of the access request type and information of access priority.

In the control method of random access based on the TD-SCDMA system, the MAC entities of the terminal side comprise MAC-e entity and MAC-c/sh entity. Different kinds of random access requests correspond to different transport channel types. The MAC-e entity, corresponding to uplink enhanced random access control transport channel, is used to control uplink enhanced random access request and process uplink enhanced random access information; the MAC-c/sh entity, corresponding to random access transport channel, is used to control common random access request and process common random access information.

In the control method of random access based on the TD-SCDMA system, in the step 3, further comprising a step that the physical layer of the terminal side processes each physical layer access request respectively according to the amount of the received physical layer access requests, the priority information of the physical layer access requests and the processing situation of the physical layer access requests.

In the control method of random access based on the TD-SCDMA system, in the step 3, further comprising a step that the physical layer of the terminal side initiates physical layer uplink synchronization process for one selected access request type each time and sends physical layer access confirmation to the MAC entity of the terminal side corresponding to the selected access request type.

In the control method of random access based on the TD-SCDMA system, the step 3 further comprises:
If receiving physical layer access requests from two MAC entities of the terminal side at the same time, the physical layer of the terminal side selects an access request type with high priority according to the access priority information of the physical layer access requests and initiates physical layer uplink synchronization process for the physical layer access request with high priority. For the access request type with relatively low priority, the physical layer of the terminal side saves the physical layer access request with relatively low priority and then performs the physical layer access request with relatively low priority after the physical layer access request with high priority are completed; or the physical layer of the terminal side directly sends physical layer access confirming information to the corresponding MAC entities of the terminal side, indicating the failure of physical layer access requests.

If the physical layer of the terminal side receives only one physical layer access request from one MAC entity of the terminal side while no physical layer access process is being performed in the physical layer of the terminal side, physical layer uplink synchronization process is initiated for the physical layer access request.

If the physical layer of the terminal side receives one or plural physical layer access requests from MAC entities of the terminal side while there is physical layer access process being performed in the physical layer of the terminal side, the physical layer of the terminal side saves the physical layer access requests and performs the physical layer access requests according to the access priority information after completion of the access process being performed; or the physical layer of the terminal side sends physical layer access confirming information directly to the corresponding MAC entities of the terminal side, indicating the failure of physical layer access requests.

Or, if the physical layer of the terminal side receives physical layer access requests from two MAC entities of the terminal side simultaneously, the physical layer of the terminal side processes the physical layer access requests one after the other, wherein an access request type with high priority is first selected according to access priority information of the physical layer access requests, and physical layer uplink synchronization process is initiated for the physical layer access request with high priority and then physical layer uplink synchronization process is initiated in the next sub-frame for the physical layer access request with low priority. If the physical layer of the terminal side receives one or plural physical layer access requests from MAC entities of the terminal side while there is physical layer access process being performed in the physical layer of the terminal side, the physical layer of the terminal side, according to access priority information, initiates physical layer uplink synchronization process one after the other for the received physical layer access requests.

In the control method of random access based on TD-SCDMA system, between step 3 and step 4 there further comprises a step that when the physical layer access is successful, the corresponding MAC entity of the terminal side sends MAC data sending request to the physical layer of the terminal layer.

In the control method of random access based on TD-SCDMA, the MAC data sending request comprises at least the type of the MAC data sending request and MAC data requested to be sent.

In the control method of random access based on TD-SCDMA system, between step 3 and step 4 there further comprises: the physical layer of the terminal side receives MAC data sending requests from different MAC entities of the terminal side respectively; and then processes the different types of MAC data requested to sent by different MAC data processing methods and sends the received MAC data through the same random access physical channel; or sends the received different types of MAC data through different types of random access physical channels selected according to the types of MAC data sending requests.

In the control method of random access based on TD-SCDMA system, if the MAC data sending request is a common random access request from MAC-c/sh entity, the sending MAC data is processed by The processing method with normal CRC and if the MAC data sending request is an uplink enhanced random access request, the sending MAC data is processed by The processing method with reversed order CRC.

In the control method of random access based on TD-SCDMA system, if the MAC data sending request is a common random access request from MAC-c/sh entity, the MAC data is sent through a selected physical random access channel and if the MAC data sending request is an uplink enhanced random access request, then the MAC data is sent through a selected uplink enhanced random access physical channel.

In the control method of random access based on TD-SCDMA system, between step 3 and step 4 there further comprises: when the physical layer access is failed, a step of corresponding failure processing is performed, wherein:
If the number of times of physical layer access requests sent by the MAC entity of the terminal side does not exceed the maximum number of access request times pre-configured by the network side, a physical layer access request is initiated again; otherwise, the MAC entity of the terminal side sends MAC process failure information to the upper layer of radio link control.

In the control method of random access based on TD-SCDMA system, the physical layer access request comprises at least information of access request type, information of access priority and MAC data requested to be sent.

In the control method of random access based on TD-SCDMA system, the step 3 further comprises a step that the physical layer of the terminal side processes each physical layer access request respectively according to the amount of the received physical layer access requests, priority information of the physical layer access requests and processing situation of the physical layer access requests.

In the control method of random access based on TD-SCDMA system, the step 3 further comprises a step that the physical layer of the terminal side initiates physical layer uplink synchronization process for one selected access request type each time and performs an operation according to the result of the uplink synchronization process.

In the control method of random access based on TD-SCDMA system, if the uplink synchronization is successful, the physical layer of the terminal side either processes the different types of MAC data requested to sent by different MAC data processing methods and sends received MAC data through the same random access physical channel; or the physical layer of the terminal side sends the received different types of MAC data through different types of random access physical channels selected according to the types of MAC data sending requests and sends information about physical layer access success to corresponding MAC entity of the terminal side; if the uplink synchronization is failed, the physical layer of the terminal side sends information about physical layer access failure to corresponding MAC entity of the terminal side.

The present invention provides a control method of random access where there are plural kinds of random access requests in the TD-SCDMA system, which is such a method that different random access requests are controlled by different MAC entities so that different random access types are distinguished in the physical layer. The control method achieves such an object that uplink synchronization process of the physical layer is shared in the physical layer while different processing methods of random access request sending data or different physical random access channels are used during different processes of random access requests.

The present invention will be described in details in combination with the accompanying drawings and embodiments as follows, which are not used to restrict the present invention.

### Brief description of the drawings

- Fig. 1: is the principle chart of the present invention;
- Fig. 2: is the flow chart of the first embodiment of the present invention;
- Fig. 3: is the flow chart of the second embodiment of the present invention.

### Detailed description of the preferred embodiments

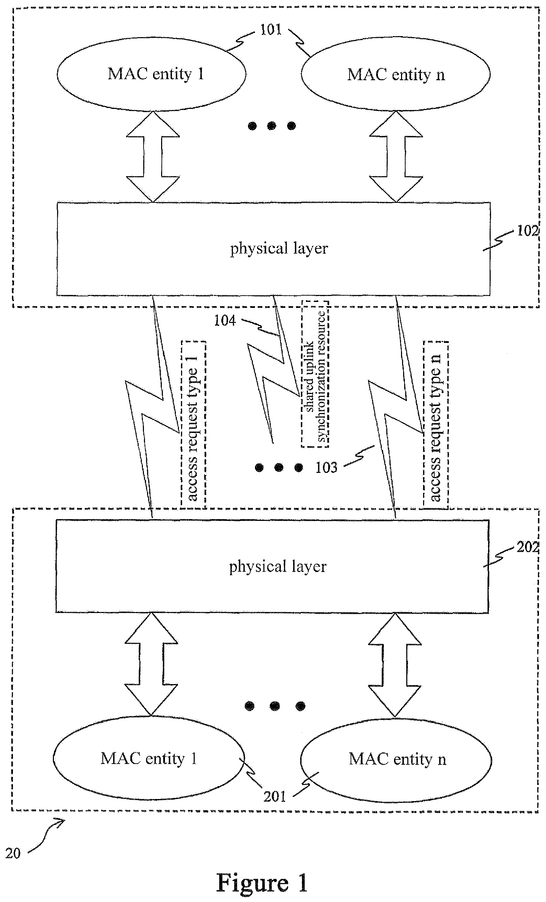

Fig. 1 is the principle chart of the present invention. The present system comprises terminal side 10 and network side 20, wherein the MAC layers of the terminal side 10 and the network side 20 are provided with different MAC entities 101 and MAC entities 201 respectively to control different types of random access requests and process different random access information; physical layer 102 and physical layer 202 are respectively provided at the terminal side 10 and the network side 20; different MAC entities 101 of the terminal side 10 independently initiates a physical layer access request at least indicating/ including the access request type 103 and access priority information to the physical layer 102; at the terminal side 10, the physical layer 102 respectively receives physical layer access requests from different MAC entities 101 and manages/processes shared uplink synchronization resource 104. Specifically, the physical layer 102 respectively processes each physical layer access request according to the amount of the received physical layer access requests, access priority information of each physical layer access request and processing situation of physical layer access requests; the physical layer 202 of the network side 20, according to processing methods of different random access request sending data or different types of random access physical channels, distinguishes different random access requests, which are then sent to the corresponding MAC entities 201 of the network side to be subjected to corresponding random access information processing.

Wherein, the MAC entities 101 comprise MAC entity 1, MAC entity 2......MAC entity n, wherein n ≥ 2. The MAC entities 201 also comprise MAC entity 1, MAC entity 2......MAC entity n, wherein n ≥ 2. The access request types 103 comprise access request type 1, access request type 2......access request type n, wherein n ≥ 2.

The present invention provides a control method of random access when there are plural random access requests in TD-SCDMA system. Introducing uplink enhanced random access request in TD-SCDMA system is taken as an example to illustrate the present invention as follows.

When introducing uplink enhanced technology in TD-SCDMA system, in the process of scheduling uplink enhanced shared resource by Node B, since UE (User Equipment) needs sending uplink data sending request information to Node B by means of random access, a new random access physical channel resource needs to be added in the physical layer to carry the random access information. Thus, there will be two kinds of random access requests in TD-SCDMA system, among which one is the common random access request described in the background technologies and the other is the uplink enhanced random access request.

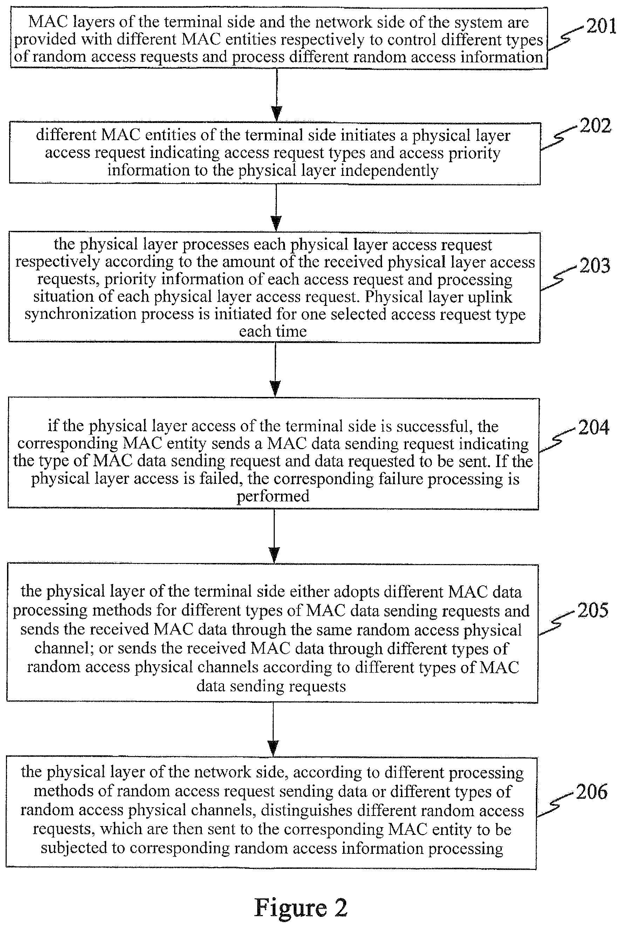

Fig. 2 is the flow chart of the first embodiment of the present invention. In combination with Fig. 1, the flow comprises the following steps:
Step 201, MAC layers of the terminal side and the network side of the system are provided with different MAC entities respectively to control different types of random access requests and process different random access information.

When introducing uplink enhanced technology in TD-SCDMA system, a new MAC entity-MAC-e is introduced in the MAC layers of the terminal side and the network side, one of whose functions is to control uplink enhanced random access request and process uplink enhanced random access information. In the current system, the existing MAC-c/sh entity controls common random access requests and processes common random access information.

Step 202, different MAC entities of the terminal side initiates a physical layer access request to the physical layer of the terminal side independently.

At the terminal side, the control to uplink enhanced random access by MAC-e entity and the control to common random access by MAC-c/sh entity are independent from each other. When having random access request, MAC-e entity and MAC-c/sh entity independently initiates a physical layer access request to the physical layer respectively. The request information includes at least information of indicating access request type and information of random access priority.

Different types of random access request sent by different MAC entities correspond to different types of transport channel. The common random access request in the current TD-SCDMA system corresponding to random access transport channel (RACH) can be identified by adding information indicating access request type or indicated by specific existing information having the ability of exclusively identifying common random access request, for example by Transport Format (TF) information included. The added uplink enhanced random access request corresponding to uplink enhanced random access control transport channel can be identified by special information indicating access request type such as uplink enhanced random access indicating information or by other special information having the ability of exclusively identifying uplink enhanced random access request such as identifying without including transport format information.

The same as MAC-c/sh entity, MAC-e entity may adopt ASC (Access Service Classes) to indicate access priority. The selection of ASC can be determined according to MLP (MAC Logical channel Priority) of one or plural logical channels triggering the present random access request and ASC used by UE.

Step 203, at the terminal side, the physical layer receives physical layer access requests from different MAC entities respectively and manages shared uplink synchronization resource. The physical layer processes each physical layer access request respectively according to the amount of the received physical layer access requests, priority information of each access request and processing situation of physical layer access requests. Uplink synchronization process of the physical layer is initiated for one selected access request type each time and physical layer access confirmation information is sent to the MAC entity of the terminal side corresponding to the above selected access request type.

Wherein, shared uplink synchronization resource is pre-configured by the network terminal and sent to the terminal side through system information. If receiving physical layer access requests from two MAC entities simultaneously, the physical layer selects the access request type with high priority according to priority information of the physical layer access requests and initiates uplink synchronization process of the physical layer first to the physical layer access request. For the access request type with relatively low priority, the physical layer can save the physical layer access requests and then perform the same after completing the access request with high priority; or the physical layer directly send physical layer access confirmation information indicating failure of the physical layer access to the MAC entity sending the access request with low priority. If the physical layer only receives one physical layer access request from one MAC entity and at this time no physical layer access processing from other MAC entities is being performed in the physical layer, uplink synchronization process of the physical layer is initiated for the physical layer access request. If receiving one or plural physical layer access requests from MAC entities and at this time there is physical layer access processing from other MAC entities being performed in the physical layer, the physical layer can save the access requests and then perform the physical layer access requests according to access priority information after completing the access request being performed; or the physical layer directly sends physical layer access confirmation information indicating failure of the physical layer access to the MAC entity requesting the access. If receiving physical layer access requests from two MAC entities of the terminal side simultaneously, the physical layer of the terminal side processes the two requests one after the other. According to access priority information of the physical layer access requests, the physical layer of the terminal side first selects an access request type with high priority and initiates uplink synchronization process of the physical layer to the physical layer of the high priority, and then initiates uplink synchronization process of the physical layer to the other physical layer access request with low priority in the next sub-frame. The physical layer of the terminal side and that of the network side process two physical layer access requests arriving at the same time one after the other but in a parallel way in an operating mode similar to pipelining. If the physical layer of the terminal side receives one or plural physical layer access requests from MAC entities of the terminal side and at this time there is physical layer access process being performed in the physical layer of the terminal side, the physical layer initiates uplink synchronization process of the physical layer one after the other according to access priority information for the new received physical layer access requests. The physical layer of the terminal side and that of the network side also process these physical layer access requests one after the other but in a parallel way in an operating mode similar to pipelining.

The uplink synchronization process of the physical layer here is the same as that in TD-SCDMA system of the 3GPP standards (Release 6), i.e.: UE, according to network configuration information and/or the configuration information of the internal USIM (Universal Subscriber Identity Module) card of itself, sends uplink synchronization code to Node B, and then monitors the corresponding FPACH physical channel within the sub-frame number pre-configured by the network. If UE receives the responding message of the present uplink synchronization in the FPACH physical channel, the uplink synchronization is successful, otherwise failed. If one uplink synchronization is failed, UE can also perform a plurality of the above description uplink synchronization processes until the number of the processes reaches the number of times pre-configured by the network side. After the completion of uplink synchronization, the physical layer sends physical layer access confirmation information to the MAC entity corresponding to the selected access request type above including the information whether the uplink synchronization is successful or not, i.e. whether the physical layer access is successful or not.

Step 204, if the physical layer access of the terminal side is successful, the corresponding MAC entity of the terminal side sends MAC data sending request indicating/including at least type of MAC data sending request and data requested to be sent. If the physical layer access is failed, the corresponding failure processing is performed.

When receiving the physical layer access confirmation information, if the physical layer access is successful, the MAC entity sends MAC data sending request at least including/indicating the information of types of MAC data sending requests and data requested to be sent to the physical layer. Meanwhile, MAC layer sends MAC process success information to upper layer RLC (Radio Link Control) layer. If the physical layer access is failed, the present processing method in the MAC-c/sh entities can be adopted, i.e. if the number of request times of sending physical layer access does not exceed the maximum number of access request times pre-configured by the network side, a physical layer access request is initiated again; otherwise, MAC layer sends MAC process failure information to the upper layer RLC layer.

Step 205, the physical layer of the terminal side respectively receives MAC data sending requests from different MAC entities, the physical layer either processes different types of MAC data sending request by using different MAC data processing methods to identify different MAC data sending requests, and then sends the received MAC data through the same random access physical channel; or sends the received MAC data by selecting different types of random access physical channels according to different types of MAC data sending requests.

The physical layer receives MAC data sending requests from different MAC entities respectively and manages all different types of random access physical channel resources pre-configured by the network side and sent to the terminal side through system information. When receiving MAC data sending request, the physical layer selects different random access physical channels according to types of MAC data sending requests to send the received MAC data. For a common random access request from MAC-c/sh entity, MAC data is sent through selected PRACH physical channel, the selecting method of which can be referred to the 3GPP standard 25.224 v6.6.0. For uplink enhanced random access request, MAC data is sent through selected uplink enhanced random access physical channel, the selecting method of which can be referred to that of PRACH physical channel. The two different types of physical channels, the PRACH physical channel and the uplink enhanced random access physical channel, can also share the same spread spectrum code channel resource.

Or, the physical layer receives MAC data sending requests from different MAC entities respectively and sends the received different types of random access request MAC data through the same random access physical channel. Different random access requests are distinguished by adopting different processing methods of random access request sending data. One of the possible methods is as follows: if MAC data sending request is a common random access request from MAC-c/sh entity, the processing method with normal CRC is used to process the sending data; if MAC data sending request is an uplink enhanced random access request, the processing method with reversed order CRC is used to process the sending data.

Step 206, the physical layer of the network side, according to different processing methods of random access request sending data or different types of random access physical channels, distinguishes different random access requests, which are then sent to the corresponding MAC entity of the network side to be subjected to corresponding random access information processing.

The physical layer distinguishes different random access requests by different types of random access physical channels to adopt corresponding processing methods. For PRACH channel, MAC data received from PRACH channel is sent in the form of random access (RACH) transport channel to MAC-c/sh entity in RNC (Radio Network Controller) and is then processed; for uplink enhanced random access physical channel, MAC data received from which is sent in the form of uplink enhanced random access control transport channel to MAC-e entity in Node B.

Or, the physical layer of the network side distinguishes different random access requests by different processing methods of random access request sending data. The physical layer of the network side receives the same random access physical channel. After receiving MAC data, the physical layer of the network side processes MAC data by using the processing method with normal CRC and the processing method with reversed order CRC, respectively. If the processing result of the processing method with normal CRC is correct, the received MAC data is sent in the form of random access (RACH) transport channel to MAC-c/sh entity in radio network controller and is then processed. If the processing result of the processing method with reversed order CRC is correct, the received MAC data is sent in the form of uplink enhanced random access control transport channel to MAC-e entity of Node B and is then processed. If both of the two processing results are wrong, discard processing can be performed.

The process is mainly performed at the terminal side, however, in view of protocol, protocol entities are equivalent with each other. For example, MAC-e entity of the terminal side requires sending information to the equivalent MAC-e entity of the network side, and the sending process must be completed through random access process.

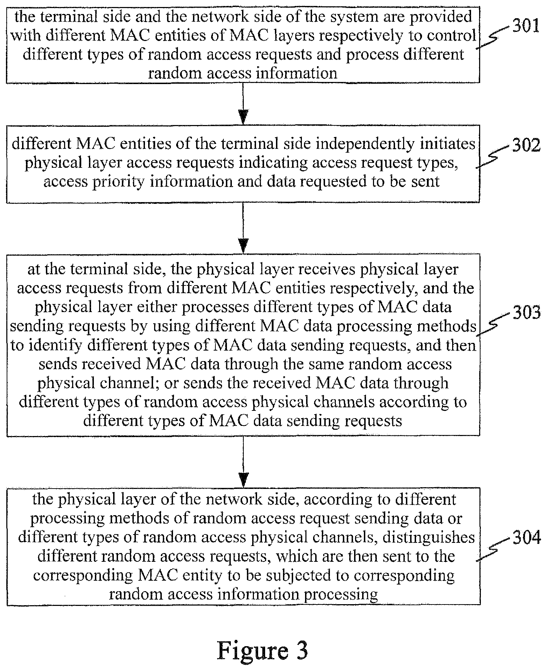

Fig. 3 is the flow chart of the second embodiment of the present invention. In combination with Fig. 1, the flow comprises the following steps: Step 301, MAC layers of the terminal side and the network side of the system are provided with different MAC entities respectively to control different types of random access requests and process different random access information.

When uplink enhanced technology is introduced in the TD-SCDMA system, a new MAC entity-MAC-e is introduced in the MAC layers of the terminal side and the network side, one of whose functions is to control uplink enhanced random access request and process uplink enhanced random access information. And in the current system, the existing MAC-c/sh entity controls common random access requests and processes common random access information.

Step 302, different MAC entities of the terminal side independently initiates physical layer access requests to the physical layer of the terminal side.

At the terminal side, the control to uplink enhanced random access by MAC-e entity and the control to common random access by MAC-c/sh entity are independent from each other. When having random access requests, MAC-e entity and MAC-c/sh entity independently initiates a physical layer access request to the physical layer respectively. The request information includes at least information indicating access request type, information of random access priority and the data requested to be sent. The indication forms of access request type information and access priority are the same as those in the first embodiment.

Step 303, at the terminal side, the physical layer receives physical layer access requests from different MAC entities respectively, and the physical layer either processes different types of MAC data sending requests by using different MAC data processing methods to identify different MAC data sending requests, and then sends the received MAC data through the same random access physical channel; or sends the received MAC data by selecting different types of random access physical channels according to different types of MAC data sending requests.

The physical layer processes each physical layer access request respectively according to the amount of the received physical layer access requests, priority information of each physical layer access request and processing situation of physical layer access request. If receiving physical layer access requests from two MAC entities simultaneously, the physical layer selects the access request type with high priority to process according to priority information of physical layer access requests. For the access request with relatively low priority, the physical layer may save the physical layer access requests and then perform the access request with low priority after completing the access request with high priority; or the physical layer directly sends physical layer access confirmation information indicating failure of the physical layer access to the corresponding MAC entity. If receiving one or plural physical layer access requests from MAC entities and at this time there is physical layer access processing from other MAC entities being performed in the physical layer, the physical layer may save the physical layer access requests and then perform the physical layer access requests according to access priority information after completing the access request being performed; or the physical layer may directly sends physical layer access confirmation information indicating failure of the physical layer access to the MAC entity requesting the access. If receiving physical layer access requests from two MAC entity of the terminal side simultaneously, the physical layer of the terminal side processes the two requests one after the other, and first selects an access request type with high priority to process according to the access priority information of the physical layer access requests, and then processes the other physical layer access request with low priority in the next sub-frame. The physical layer of the terminal side and that of the network side process two physical layer access requests arriving at the same time one after the other but in a parallel way in an operating mode similar to pipelining. If the physical layer of the terminal side receives one or plural physical layer access requests from MAC entities of the terminal side and at this time there is physical layer access process being performed in the physical layer of the terminal side, the physical layer processes the new received physical layer access requests one after the other according to access priority information. The physical layer of the terminal side and that of the network side also process these physical layer access requests one after the other but in a parallel way in an operating mode similar to pipelining. Physical layer uplink synchronization process is initiated for the selected access request types and operation is performed according to the result of the uplink synchronization process. The physical layer uplink synchronization process here is the same as that in the first embodiment shown in Fig. 2. If uplink synchronization is successful, the received MAC data is sent and information about physical layer access success is sent to the corresponding MAC entity through physical layer access confirmation. If uplink synchronization is failed, information about physical layer access failure is sent to the corresponding MAC entity through physical layer access confirmation.

When sending MAC data, the physical layer sends the received MAC data by selecting different physical random access channels according to types of MAC data sending requests. All different types of random access physical channel resources are pre-configured by the network side and sent to the terminal side through system information. For a common random access from MAC-c/sh entity, MAC data is sent through selected PRACH physical channels, the selecting method of which can be referred to the 3GPP standard 25.224 v6.6.0. For uplink enhanced random access, MAC data is sent through selected uplink enhanced random access physical channels, the selecting method of which can be referred to that of PRACH physical channel. The two different types of physical channels, the PRACH physical channel and the uplink enhanced random access physical channel, can also share the same spread spectrum code channel resource.

Or, when sending MAC data, for the received MAC data sending requests from different MAC entities, the physical layer processes MAC data by using different processing methods of random access request sending data, wherein one of possible methods is that, if the MAC data sending request is a common random access request from MAC-c/sh entity, the processing method with normal CRC is used to process the sending data; if the MAC data sending request is an uplink enhanced random access request, the processing method with reversed order CRC is used to process the sending data. Then, the physical layer performs sending through the same random access physical channel.

After MAC entity receives physical layer access confirmation information, if the physical layer access is successful, MAC layer sends MAC process success information to upper layer RLC layer simultaneity. If the physical layer access is failed, the current processing method in the MAC-c/sh entities can be adopted, i.e. if the number of times of sending physical layer access request does not exceed the maximum number of access request times pre-configured by the network side, a physical layer access request is initiated again; otherwise, MAC layer sends MAC process failure information to upper layer RLC layer.

Step 304, the physical layer of the network side, according to different processing methods of random access request sending data or different types of random access physical channels, distinguishes different random access requests, which are then sent to the corresponding MAC entity of the network side to be subjected to corresponding random access information processing.

The physical layer of the network side distinguishes different random access requests through different types of random access physical channels to adopt corresponding processing methods, wherein for a PRACH channel, MAC data received from PRACH channel is sent in the form of random access (RACH) transport channels to MAC-c/sh entity in RNC (Radio Network Controller) and is then processed; for an uplink enhanced random access physical channel, MAC data received from the uplink enhanced random access physical channel is sent in the form of uplink enhanced random access control transport channels to MAC-e entity of Node B.

Or, the physical layer of the network side distinguishes different random access requests through different processing methods of random access request sending data. The physical layer of the network side receives the same random access physical channel. After receiving MAC data, the physical layer of the network side processes MAC data by using the processing method with normal CRC and the processing method with reversed order CRC respectively. If the processing result of the processing method with normal CRC is correct, the received MAC data is sent in the form of random access (RACH) transport channels to MAC-c/sh entity in radio network controller and is then processed. If the processing result of the processing method with reversed order CRC is correct, the received MAC data is sent in the form of uplink enhanced random access control transport channels to MAC-e entity of Node B and is then processed. If both of the two processing methods are wrong, discard processing can be performed.

The process is mainly performed at the terminal side, however, in view of protocol, protocol entities are equivalent with each other. For example, if MAC-e entity of the terminal side requires sending information to the equivalent MAC-e entity of the network side, and the sending process must be completed through random access process.

In the present invention, uplink synchronization process is mainly used to solve the allocation problem of uplink random access resources based on conflict solution. Therefore, if the uplink synchronization process of the present invention is substituted by other methods and processes of allocating problem of uplink random access resources based on conflict solution, the present invention can be applied to other wirless communication systems to solve the problem of random access control when there are plural random access requests in the system.

It is to be noted that, if not conflicting, the embodiments and the technology features of the embodiments of the present invention can be combined with each other.

The descriptions above are only preferred embodiments of the present invention, which are not used to restrict the present invention.

## Claims

1. A control method of random access based on TD-SCDMA system adaptable for TD-SCDMA system, which comprises network side, terminal side, a physical layer of the terminal side and a physical layer of the network side of radio interface protocol structure, **characterized in**, the control method comprising:
Step 1: the MAC layers of the terminal side and the network side are provided with different MAC entities of the terminal side and the network side respectively to control different kinds of random access requests and process different random access information;
Step 2: the different MAC entities of the terminal side independently initiates physical layer access requests to the physical layer of the terminal side;
Step 3: the physical layer of the terminal side receives and processes the physical layer access requests; and
Step 4: the physical layer of the network side, according to the different methods used to process the data sent in random access request or different kinds of the used random access physical channels, distinguishes different random access requests, which are then sent to the corresponding MAC entities of the network side to be subjected to corresponding random access information process;
wherein, the step 4 further comprises: the physical layer of the network side distinguishes different random access requests through the used different types of random access physical channels, wherein if it is physical random access channel, the MAC data received from the physical random access channel is sent to MAC-c/sh entity in the radio network controller in the form of random access transport channel and is then processed; and if it is uplink enhanced random access physical channel, the MAC data received from the uplink enhanced random access physical channel is sent to the MAC-e entity in the node B in the form of uplink enhanced random access control transport channel and is then processed;
wherein, the step 4 further comprises the physical layer of the network side distinguishes different random access requests by different processing methods used for the date sent in the random access request, wherein if the data is processed by method with normal CRC and the processing result is correct, the received MAC data is sent to the MAC-c/sh entity in the radio network controller in the form of random access transport channel and is then processed; and if data is processed by method with reversed ordered CRC and the processing result is correct, the received MAC data is sent to the MAC-e entity in the node B in the form of uplink enhanced random access control transport channel and is then processed.

2. A control method of random access based on the TD-SCDMA system according to claim 1, **characterized in**, the physical layer access requests comprises at least information of the access request type and information of access priority.

3. A control method of random access based on the TD-SCDMA system according to claim 1 or 2, **characterized in**, the MAC entities of the terminal side comprise MAC-e entity and MAC-c/sh entity; different kinds of random access requests correspond to different transport channel types; the MAC-e entity, corresponding to uplink enhanced random access control transport channel, is used to control uplink enhanced random access request and process uplink enhanced random access information; the MAC-c/sh entity, corresponding to random access transport channel, is used to control common random access request and process common random access information.

4. A control method of random access based on the TD-SCDMA system according to claim 1 or 2, **characterized in**, in the step 3, further comprising a step that the physical layer of the terminal side processes each physical layer access request respectively according to the amount of the received physical layer access requests, the priority information of the physical layer access requests and the processing situation of the physical layer access requests.

5. A control method of random access based on the TD-SCDMA system according to claim 4, **characterized in**, in the step 3, further comprising a step that the physical layer of the terminal side initiates physical layer uplink synchronization process for one selected access request type each time and sends physical layer access confirmation to the MAC entity of the terminal side corresponding to the selected access request type.

6. A control method of random access based on the TD-SCDMA system according to claim 5, **characterized in**, the step 3 further comprises:
If receiving physical layer access requests from two MAC entities of the terminal side at the same time, the physical layer of the terminal side selects an access request type with high priority according to the access priority information of the physical layer access requests and initiates physical layer uplink synchronization process for the physical layer access request with high priority; for the access request type with relatively low priority, the physical layer of the terminal side saves the physical layer access request with relatively low priority and then performs the physical layer access request with relatively low priority after the physical layer access request with high priority are completed; or the physical layer of the terminal side directly sends physical layer access confirming information to the corresponding MAC entities of the terminal side, indicating the failure of physical layer access requests;
If the physical layer of the terminal side receives only one physical layer access request from one MAC entity of the terminal side while no physical layer access process is being performed in the physical layer of the terminal side, physical layer uplink synchronization process is initiated for the physical layer access request;
If the physical layer of the terminal side receives one or plural physical layer access requests from MAC entities of the terminal side while there is physical layer access process being performed in the physical layer of the terminal side, the physical layer of the terminal side saves the physical layer access requests and performs the physical layer access requests according to the access priority information after completion of the access process being performed; or the physical layer of the terminal side sends physical layer access confirming information directly to the corresponding MAC entities of the terminal side, indicating the failure of physical layer access requests;
Or, if the physical layer of the terminal side receives physical layer access requests from two MAC entities of the terminal side simultaneously, the physical layer of the terminal side processes the physical layer access requests one after the other, wherein an access request type with high priority is first selected according to access priority information of the physical layer access requests, and physical layer uplink synchronization process is initiated for the physical layer access request with high priority and then physical layer uplink synchronization process is initiated for the physical layer access request with low priority in the next sub-frame; if the physical layer of the terminal side receives one or plural physical layer access requests from MAC entities of the terminal side while there is physical layer access process being performed in the physical layer of the terminal side, the physical layer of the terminal side, according to access priority information, initiates physical layer uplink synchronization process one after the other for the received physical layer access requests.

7. A control method of random access based on the TD-SCDMA system according to claim 6, **characterized in**, between step 3 and step 4 there further comprises a step that when the physical layer access is successful, the corresponding MAC entity of the terminal side sends MAC data sending request to the physical layer of the terminal layer.

8. A control method of random access based on the TD-SCDMA system according to claim 7, **characterized in**, the MAC data sending request comprises at least the type of the MAC data sending request and MAC data requested to be sent.

9. A control method of random access based on the TD-SCDMA system according to claim 8, **characterized in**, between step 3 and step 4 there further comprises: the physical layer of the terminal side receives MAC data sending requests from different MAC entities of the terminal side respectively; and then processes the different types of MAC data requested to sent by different MAC data processing methods and sends the received MAC data through the same random access physical channel; or sends the received different types of MAC data through different types of random access physical channels selected according to the types of MAC data sending requests.

10. A control method of random access based on the TD-SCDMA system according to claim 9, **characterized in**, if the MAC data sending request is a common random access request from MAC-c/sh entity, the sending MAC data is processed by the processing method with normal CRC; and if the MAC data sending request is an uplink enhanced random access request, the sending MAC data is processed by the processing method with reversed order CRC.

11. A control method of random access based on the TD-SCDMA system according to claim 9, **characterized in**, if the MAC data sending request is a common random access request from MAC-c/sh entity, the MAC data is sent through a selected physical random access channel; and if the MAC data sending request is an uplink enhanced random access request, the MAC data is sent through a selected uplink enhanced random access physical channel.

12. A control method of random access based on the TD-SCDMA system according to claim 6, **characterized in**, between step 3 and step 4 there further comprises:
when the physical layer access is failed, a step of corresponding failure processing is performed, wherein:
If the number of times of physical layer access requests sent by the MAC entity of the terminal side does not exceed the maximum number of access request times pre-configured by the network side, a physical layer access request is initiated again; otherwise the MAC entity of the terminal side sends MAC process failure information to the upper layer of radio link control.

13. A control method of random access based on the TD-SCDMA system according to claim 1, **characterized in**, the physical layer access request comprises at least information of access request type, information of access priority and MAC data requested to be sent.

14. A control method of random access based on the TD-SCDMA system according to claim 13, **characterized in**, the step 3 further comprises a step that the physical layer of the terminal side processes each physical layer access request respectively according to the amount of the received physical layer access requests, priority information of the physical layer access requests and processing situation of the physical layer access requests.

15. A control method of random access based on the TD-SCDMA system according to claim 14, **characterized in**, the step 3 further comprises a step that the physical layer of the terminal side initiates physical layer uplink synchronization process for one selected access request type each time and performs an operation according to the result of the uplink synchronization process.

16. A control method of random access based on the TD-SCDMA system according to claim 15, **characterized in**, if the uplink synchronization is successful, the physical layer of the terminal side either processes the different types of MAC data requested to sent by different MAC data processing methods and sends received MAC data through the same random access physical channel; or the physical layer of the terminal side sends the received different types of MAC data through different types of random access physical channels selected according to the types of MAC data sending requests and sends information about physical layer access success to corresponding MAC entity of the terminal side; if the uplink synchronization is failed, the physical layer of the terminal side sends information about physical layer access failure to corresponding MAC entity of the terminal side.

## Patentansprüche

1. Direktzugriffs-Steuerverfahren auf der Basis eines TD-SCDMA-Systems, das für das TD-SCDMA-System geeignet ist und folgendes aufweist: eine Netzseite, eine Anschlußseite, eine physikalische Schicht der Anschlußseite und eine physikalische Schicht der Netzseite der Funkschnittstellen-Protokollstruktur, **dadurch gekennzeichnet, daß** das Steuerverfahren folgendes aufweist:
Schritt 1: Die MAC-Schichten der Anschlußseite und der Netzseite sind mit unterschiedlichen MAC-Einheiten der Anschlußseite bzw. der Netzseite versehen, und zwar zur Steuerung unterschiedlicher Anforderungsarten für den Direktzugriff und die Verarbeitung unterschiedlicher Direktzugriffsinformationen;
Schritt 2: Die unterschiedlichen MAC-Einheiten der Anschlußseite initiieren unabhängig physikalische Schichtzugriffs-Anforderungen für die physikalische Schicht der Anschlußseite;
Schritt 3: Die physikalische Schicht der Anschlußseite empfängt und verarbeitet die physikalischen Schichtzugriffs-Anforderungen; und
Schritt 4: Die physikalische Schicht der Netzseite unterscheidet entsprechend den verschiedenen verwendeten Verfahren zur Bearbeitung der gesendeten Direktzugriffs-Datenanforderung oder verschiedenen Arten von physikalischen Direktzugriffs-Kanälen unterschiedliche Direktzugriffs-Anforderungen, die dann an die entsprechenden MAC-Einheiten der Netzseite gesendet werden, also entsprechend dem Direktzugriffs-Informationsprozeß;
wobei der Schritt 4 des weiteren folgendes umfaßt: Die physikalische Schicht der Netzseite unterscheidet verschiedene Direktzugriffs-Aufforderungen durch die verwendeten verschiedenen Arten von physikalischen Direktzugriffs-Kanälen, wobei dann, wenn sie ein physikalischer Direktzugriffs-Kanal ist, die MAC-Daten, die von dem physikalischen Direktzugriffs-Kanal erhalten werden, an die MAC-c/sh-Einheit in dem Funknetzsteuerer in Form des physikalischen Direktzugriffs-Kanals gesendet und dann verarbeitet werden; und wenn es ein uplink-verstärkter, physikalischer Direktzugriffs-Kanal ist, dann werden die von dem uplink-verstärkten, physikalischen Direktzugriffs-Kanal empfangenen MAC-Daten an die MAC-e-Einheit in dem Knoten B in der Form eines uplink-verstärkten Direktzugriffs-Steuertransport-Kanals gesendet und dann bearbeitet;
wobei ferner zu dem Schritt 4 gehört, daß die physikalische Schicht der Netzseite sich von den verschiedenen Direktzugriffs-Aufforderungen durch unterschiedliche Bearbeitungsverfahren unterscheidet, die für die gesendeten Daten in der Direktzugriffs-Aufforderung benutzt werden, wobei dann,
wenn sie durch das Verfahren mit normaler CRC bearbeitet werden und das Bearbeitungsergebnis richtig ist, die empfangenen MAC-Daten an die MAC-c/sh-Einheit in dem Funknetzsteuerer gesendet werden, und zwar in Form des Direktzugriffs-Transportkanals, und dann bearbeitet werden; und wenn die Daten mit dem Verfahren in umgekehrter Reihenfolge CRC bearbeitet werden und das Bearbeitungsergebnis richtig ist, die empfangenen MAC-Daten an die MAC-e-Einheit in dem Knoten B gesendet werden, und zwar in Form des uplink-verstärkten Direktzugriff-Steuertransportkanals, und dann verarbeitet werden.

2. Direktzugriffs-Steuerverfahren auf der Basis des TD-SCDMA-Systems nach Anspruch 1, **dadurch gekennzeichnet, daß** die physikalische Schichtzugriffs-Aufforderung wenigstens eine Information über den Zugrifftyp und eine Information über die Zugriffspriorität aufweist.

3. Direktzugriffs-Steuerverfahren auf der Basis des TD-SCDMA-Systems nach Anspruch 1 oder 2, **dadurch gekennzeichnet, daß** die MAC-Einheiten der Anschlußseite eine MAC-e-Einheit und eine MAC-c/sh-Einheit aufweist; daß unterschiedliche Arten von Direktzugriffs-Aufforderungen den unterschiedlichen Transportkanaltypen entsprechen; daß die MAC-e-Einheit, die dem uplink-verstärkten Direktzugriffs-Steuertransportkanal entspricht, zur Steuerung der uplink-verstärkten Direktzugriffs-Aufforderung und zur Bearbeitung der uplink-verstärkten Direktzugriffs-Information benutzt wird; und daß die MAC-c/sh-Einheit entsprechend dem Direktzugriffs-Transportkanal zur Steuerung der gewöhnlichen Direktzugriffs-Aufforderung und zur Bearbeitung der gewöhnlichen Direktzugriffs-Information benutzt wird.

4. Direktzugriffs-Steuerverfahren auf der Basis des TD-SCDMA-Systems nach Anspruch 1 oder 2, **dadurch gekennzeichnet, daß** der Schritt 3 des weiteren einen Schritt umfaßt, der darin besteht, daß die physikalische Schicht der Anschlußseite jede physikalische Zugriffsaufforderung entsprechend bearbeitet, und zwar gemäß der Stärke der folgenden physikalischen Schichtzugriffs-Aufforderungen, der Prioritätsinformation der physikalischen Schichtzugriffs-Aufforderungen und der Verarbeitungssituation der physikalischen Schichtzugriffs-Aufforderungen.

5. Direktzugriffs-Steuerverfahren auf der Basis des TD-SCDMA-Systems nach Anspruch 4, **dadurch gekennzeichnet, daß** in dem Schritt 3 des weiteren ein Schritt enthalten ist, der darin besteht, daß die physikalische Schicht der Anschlußseite einen physikalischen Schicht-Ablenksynchronisationsprozeß jederzeit für einen Typ der ausgewählten Zugriffsaufforderung und die physikalische Schichtzugriffs-Bestätigung an die MAC-Einheit der Anschlußseite sendet, und zwar entsprechend dem ausgewählten Zugriffsaufforderungstyp.

6. Direktzugriffs-Steuerverfahren auf der Basis des TD-SCDMA-Systems nach Anspruch 5, **dadurch gekennzeichnet, daß** der Schritt 3 des weiteren folgendes umfaßt: wenn von den beiden MAC-Einheiten der Anschlußseite zur gleichen Zeit physikalische Schichtzugriffs-Aufforderungen empfangen werden, wählt die physikalische Schicht der Anschlußseite einen Zugriffsaufforderungstyp hoher Priorität gemäß der Zugriffsprioritäts-Information der physikalischen Schichtzugriffs-Aufforderungen aus und initiiert den physikalischen Schichtablenk-Synchronisationsprozeß für die physikalische Schichtzugriffs-Aufforderung mit hoher Priorität; des weiteren für den Zugriffsaufforderungstyp mit relativ geringer Priorität bewahrt die physikalische Schicht der Anschlußseite die physikalische Schichtzugriffs-Aufforderung mit relativ niedriger Priorität und verarbeitet dann die physikalische Schichtzugriffs-Aufforderung mit relativ geringer Priorität, nachdem die physikalische Schichtzugriffs-Aufforderung hoher Priorität vollendet ist; oder die physikalische Schicht der Anschlußseite sendet direkt den physikalischen Schichtzugriff, um dadurch die Information an die entsprechende MAC-Einheiten der Anschlußseite zu bestätigen, die anzeigen, daß die physikalische Schichtzugriffs-Aufforderungen versagen; des weiteren gehört zu dem Schritt 3, daß dann, wenn die physikalische Schicht der Anschlußseite nur eine physikalische Schichtzugriffs-Aufforderung an einer MAC-Einheit der Anschlußseite empfängt, während kein physikalischer Schichtzugriffs-Vorgang in der physikalischen Schicht der Anschlußseite stattfindet, der physikalische SchichtAblenk-Synchronisationsprozeß für die physikalische Schichtzugriffs-Aufforderung initiiert wird; wenn die physikalische Schicht der Anschlußseite eine oder mehrere physikalische Schichtzugriffs-Aufforderungen von den MAC-Einheiten der Anschlußseite empfängt, während ein physikalischer Schichtzugriffsprozeß in der physikalischen Schicht der Anschlußseite stattfindet, dann schützt die physikalische Schicht der Anschlußseite die physikalische Schichtzugriffs-Aufforderungen und bewerkstelligt die physikalischen Schichtzugriffs-Aufforderungen gemäß der Zugriffsprioritäts-Information, nachdem der Zugriffsprozeß durchgeführt worden ist; oder die physikalische Schicht der Anschlußseite sendet eine physikalische Schichtzugriffs-Bestätigungsinformation direkt an die entsprechenden MAC-Einheiten der Anschlußseite, so daß das Fehlen der physikalischen Schichtzugriffs-Aufforderungen angezeigt wird; oder, falls die physikalische Schicht der Anschlußseite physikalischer Schichtzugriffs-Aufforderungen von den beiden MAC-Einheiten der Anschlußseite gleichzeitig empfängt, dann verarbeitet die physikalische Schicht der Anschlußseite die physikalische Schichtzugriffs-Aufforderungen eine nach der anderen, wobei ein Zugriffsaufforderungstyp mit hoher Priorität zuerst ausgewählt wird, und zwar gemäß der Zugriffsprioritäts-Information der physikalischen Schichtzugriffs-Aufforderungen, und der physikalischen Schichtablenk-Synchronisationsprozeß für die physikalische Schichtzugriffs-Aufforderung mit hoher Priorität wird eingeleitet und daraufhin wird der physikalische Schichtablenk-Synchronisationsprozeß für die physikalische Schichtzugriffs-Aufforderung mit geringerer Priorität in dem nächsten Unterrahmen eingeleitet; wenn die physikalische Schicht der Anschlußseite eine oder mehrere physikalische Schichtzugriffs-Aufforderungen von den MAC-Einheiten der Anschlußseite empfängt, während ein physikalischer Schichtzugriffs-Prozeß in der physikalischen Schicht der Anschlußseite stattfindet, dann initiiert die physikalische Schicht der Anschlußseite gemäß der Zugriffsprioritäts-Information den physikalischen Schichtablenk-Synchronisationsprozeß einen nach dem anderen für die empfangenen physikalischen Schichtzugriffs-Aufforderungen.

7. Direktzugriffs-Steuerverfahren auf der Basis des TD-SCDMA-Systems nach Anspruch 6, **dadurch gekennzeichnet, daß** zwischen dem Schritt 3 und dem Schritt 4 ein weiterer Schritt vorliegt, der darin besteht, daß dann, wenn der physikalische Schichtzugriff erfolgreich ist, die entsprechende MAC-Einheit der Anschlußseite MAC-Daten sendet, die die Aufforderung an die physikalische Schicht der Anschlußschicht beinhaltet.

8. Direktzugriffs-Steuerverfahren auf der Basis des TD-SCDMA-Systems nach Anspruch 7, **dadurch gekennzeichnet, daß** die MAC-Daten sendende Aufforderung wenigstens den Typ der MAC-Daten aufweist, der die Aufforderung sendet und die MAC-Daten, die gesendet werden sollen.

9. Direktzugriffs-Steuerverfahren auf der Basis des TD-SCDMA-Systems nach Anspruch 8, **dadurch gekennzeichnet, daß** zwischen dem Schritt 3 und dem Schritt 4 vorgesehen ist, daß die physikalische Schicht der Anschlußseite von verschiedenen MAC-Einheiten der Anschlußseite entsprechend MAC-Daten sendende Aufforderungen empfängt und dann die verschiedenen Typen von MAC-Daten, die durch die verschiedenen MAC-Daten-Verarbeitungsverfahren gesendet werden sollen, verarbeitet und die empfangenen MAC-Daten durch den physikalischen Direktzugriffkanal sendet oder die verschiedenen Typen von MAC-Daten durch verschiedene Typen von Direktzugriff den physikalischen Kanälen sendet, die gemäß den Typen von MAC-Daten-Sendungsaufforderungen ausgewählt sind.

10. Direktzugriffs-Steuerverfahren auf der Basis des TD-SCDMA-Systems nach Anspruch 9, **dadurch gekennzeichnet, daß** dann, wenn die MAC-Daten-Sendungsaufforderung eine gewöhnliche Direktzugriffs-Aufforderung der MAC-c/sh-Einheit ist, das Senden der MAC-Daten durch das Verarbeitungsverfahren mit normaler CRC erfolgt, und wenn die MAC-Daten-Sendungsaufforderung eine uplink-verstärke Direktzugriffs-Aufforderung ist, das Senden der MAC-Daten durch das Verarbeitungsverfahren mit CRC in umgekehrter Reihenfolge stattfindet.

11. Direktzugriffs-Steuerverfahren auf der Basis des TD-SCDMA-Systems nach Anspruch 9, **dadurch gekennzeichnet, daß** dann, wenn die MAC-Datensendungs-Aufforderung eine gewöhnliche Zugriffsaufforderung von der MAC-c/sh-Einheit ist, die MAC-Daten durch einen gewählten physikalischen Direktzugriffskanal gesendet werden, und falls die MAC-Datensendungs-Aufforderung eine uplink-verstärkte Direktzugriffs-Aufforderung ist, die MAC-Daten durch einen gewählten uplink-verstärkten physikalischen Direktzugriffskanal gesendet werden.

12. Direktzugriffs-Steuerverfahren auf der Basis des TD-SCDMA-Systems nach Anspruch 6, **dadurch gekennzeichnet, daß** zwischen dem Schritt 3 und dem Schritt 4 ein weiteres Merkmal vorhanden ist, das darin besteht, daß dann, wenn der physikalische Schichtzugriff versagt, der Schritt des entsprechenden Versagungsverfahrens durchgeführt wird, der darin besteht, daß wenn die Anzahl der physikalischen Schichtzugriffs-Aufforderungen, die von der MAC-Einheit der Anschlußseite gesendet wird, nicht das Maximum der Zugriffsaufforderungszahlen übersteigt, die durch die Netzseite aufgestellt werden, wieder eine physikalische Schichtzugriffs-Aufforderung initiiert wird, anderenfalls die MAC-Einheit der Anschlußseite eine MAC-Prozeßfehl-Information an die obere Schicht der Funkverbindungssteuerung sendet.

13. Direktzugriffs-Steuerverfahren auf der Basis des TD-SCDMA-Systems nach Anspruch 1, **dadurch gekennzeichnet, daß** der physikalische Schichtzugriff wenigstens die Information des Zugriffsaufforderungstyps enthält sowie die Information über die Zugriffspriorität und die MAC-Daten, die zu senden sind.

14. Direktzugriffs-Steuerverfahren auf der Basis des TD-SCDMA-Systems nach Anspruch 13, **dadurch gekennzeichnet, daß** der Schritt 3 des weiteren den Schritt aufweist, daß die physikalische Schicht der Anschlußseite jede physikalische Schichtzugriffs-Aufforderung bearbeitet, und zwar entsprechend dem Umfang der empfangenen physikalischen Schichtzugriffs-Aufforderungen, der Prioritätinformation der physikalischen Schichtzugriffs-Aufforderungen und der Verfahrenssituation der physikalischen Schichtzugriffs-Aufforderungen.

15. Direktzugriffs-Steuerverfahren auf der Basis des TD-SCDMA-Systems nach Anspruch 14, **dadurch gekennzeichnet, daß** der Schritt 3 des weiteren einen Schritt aufweist, der darin besteht, daß die physikalische Schicht der Anschlußseite einen physikalischen Schicht-uplink-Synchronisationsprozeß initiiert, und zwar für einen ausgewählten Zugriffsaufforderungstyp zu jeder Zeit, und daß eine Bearbeitung gemäß dem Ergebnis des uplink-Synchronisationsprozesses durchgeführt wird.

16. Direktzugriffs-Steuerverfahren auf der Basis des TD-SCDMA-Systems nach Anspruch 16, **dadurch gekennzeichnet, daß** dann, wenn die uplink-Synchronisation erfolgreich ist, die physikalische Schicht der Anschlußseite entweder die unterschiedlichen Typen von MAC-Daten bearbeitet, die durch verschiedene MAC-Datenbearbeiten-Verfahren gesendet werden sollen, und die empfangenen MAC-Daten durch denselben physikalischen Direktzugriffskanal sendet; oder die physikalische Schicht der Anschlußseite die empfangenen unterschiedlichen Typen von MAC-Daten durch unterschiedliche Typen von physikalischen Direktzugriffskanälen sendet, und zwar gemäß den Typen von Anforderungen sendenden MAC-Daten und Informationen über den Zugriffserfolg der physikalischen Schicht an entsprechende MAC-Einheiten der Anschlußseite sendet und dann, wenn die uplink-Synchronisation versagt, die physikalische Schicht der Anschlußseiten Informationen über Zugriffsversagen der physikalischen Schicht an entsprechende MAC-Einheiten der Anschlußseite sendet.

## Revendications

1. Procédé de commande d'accès aléatoire fondé sur un système TD-SCDMA adaptable pour un système TD-SCDMA, qui comprend un côté du réseau, un côté du terminal, une couche physique du côté du terminal et une couche physique du côté du réseau de la structure de protocole d'interface radio, procédé de commande **caractérisé en ce qu'**il comporte :
étape 1 : les couches MAC du côté du terminal et du côté du réseau sont pourvues de différentes entités MAC du côté du terminal et du côté du réseau respectivement pour commander différents types de demandes d'accès aléatoire et pour traiter différentes informations d'accès aléatoire ;
étape 2 : les différentes entités MAC du côté du terminal formulent indépendamment des demandes d'accès de couche physique à la couche physique du côté du terminal ;
étape 3 : la couche physique du côté du terminal reçoit et traite les demandes d'accès de couche physique ; et
étape 4 : la couche physique du côté du réseau, selon les différents procédés utilisés pour traiter les données envoyées dans la demande d'accès aléatoire ou selon les différents types de canaux physiques d'accès aléatoire utilisés, distingue différentes demandes d'accès aléatoire, qui sont ensuite envoyées aux entités MAC correspondantes du côté du réseau à soumettre au traitement d'informations d'accès aléatoire correspondant ;
dans lequel l'étape 4 comprend en outre : la couche physique du côté du réseau distingue différentes demandes d'accès aléatoire à travers les différents types utilisés de canaux physiques d'accès aléatoire, dans lequel, s'il s'agit d'un canal d'accès aléatoire physique, les données MAC reçues en provenance du canal d'accès aléatoire physique sont envoyées à une entité MAC-c/sh dans l'organe de commande du réseau radio sous la forme d'un canal de transport d'accès aléatoire et elles sont ensuite traitées ; et, s'il s'agit d'un canal physique d'accès aléatoire amélioré de liaison montante, les données MAC reçues en provenance du canal physique d'accès aléatoire amélioré de liaison montante sont envoyées à l'entité MAC-e dans le noeud B sous la forme d'un canal de transport de commande d'accès aléatoire amélioré de liaison montante et elles sont ensuite traitées ;
dans lequel l'étape 4 comprend en outre la distinction, par la couche physique du côté du réseau, de différentes demandes d'accès aléatoire selon différents procédés de traitement utilisés pour les données envoyées dans la demande d'accès aléatoire, dans lequel, si les données sont traitées selon un procédé avec un CRC normal et le résultat de traitement est correct, les données MAC reçues sont envoyées à l'entité MAC-c/sh dans l'organe de commande du réseau radio sous la forme d'un canal de transport d'accès aléatoire et elles sont ensuite traitées ; et, si les données sont traitées selon un procédé avec un CRC d'ordre inversé et le résultat de traitement est correct, les données MAC reçues sont envoyées à l'entité MAC-e dans le noeud B sous la forme d'un canal de transport de commande d'accès aléatoire amélioré de liaison montante et elles sont ensuite traitées.

2. Procédé de commande d'accès aléatoire fondé sur le système TD-SCDMA selon la revendication 1, **caractérisé en ce que** les demandes d'accès de couche physique comprennent au moins des informations sur le type de demande d'accès et des informations sur la priorité d'accès.

3. Procédé de commande d'accès aléatoire fondé sur le système TD-SCDMA selon la revendication 1 ou 2, **caractérisé en ce que** les entités MAC du côté du terminal comprennent une entité MAC-e et une entité MAC-c/sh ; différents types de demandes d'accès aléatoire correspondent à différents types de canal de transport ; l'entité MAC-e correspondant au canal de transport de commande d'accès aléatoire amélioré de liaison montante est utilisée pour commander une demande d'accès aléatoire amélioré de liaison montante et traiter des informations d'accès aléatoire amélioré de liaison montante ; l'entité MAC-c/sh correspondant au canal de transport d'accès aléatoire est utilisée pour commander une demande d'accès aléatoire commun et traiter les informations d'accès aléatoire commun.

4. Procédé de commande d'accès aléatoire fondé sur le système TD-SCDMA selon la revendication 1 ou 2, **caractérisé en ce que**, à l'étape 3, le procédé comprend en outre une étape à laquelle la couche physique du côté du terminal traite chaque demande d'accès de couche physique respectivement en fonction de la quantité de demandes d'accès de couche physique reçues, des informations de priorités des demandes d'accès de couche physique et de la situation de traitement des demandes d'accès de couche physique.

5. Procédé de commande d'accès aléatoire fondé sur le système TD-SCDMA selon la revendication 4, **caractérisé en ce que**, à l'étape 3, le procédé comprend en outre une étape à laquelle la couche physique du côté du terminal lance chaque fois un traitement de synchronisation de liaison montante de couche physique pour un type de demande d'accès sélectionné et envoie une confirmation d'accès de couche physique à l'entité MAC du côté du terminal correspondant au type de demande d'accès sélectionné.

6. Procédé de commande d'accès aléatoire fondé sur le système TD-SCDMA selon la revendication 5, **caractérisé en ce que** l'étape 3 comprend en outre :
en cas de réception de demandes d'accès de couche physique en provenance de deux entités MAC du côté du terminal en même temps, la couche physique du côté du terminal sélectionne un type de demande d'accès de haute priorité en fonction des informations de priorité d'accès des demandes d'accès de couche physique et lance un traitement de synchronisation de liaison montante de couche physique pour la demande d'accès de couche physique de haute priorité ; pour le type de demande d'accès de priorité relativement basse, la couche physique du côté du terminal enregistre la demande d'accès de couche physique de priorité relativement basse puis effectue la demande d'accès de couche physique de priorité relativement basse à la fin de la demande d'accès de couche physique de haute priorité ; ou la couche physique du côté du terminal envoie directement des informations de confirmation d'accès de couche physique aux entités MAC correspondantes du côté du terminal indiquant l'échec des demandes d'accès de couche physique ;
si la couche physique du côté du terminal reçoit une seule demande d'accès de couche physique en provenance d'une entité MAC du côté du terminal pendant qu'aucun traitement d'accès de couche physique n'est en cours d'exécution dans la couche physique du côté du terminal, un traitement de synchronisation de liaison montante de couche physique est lancé pour la demande d'accès de couche physique ;
si la couche physique du côté du terminal reçoit une ou plusieurs demandes d'accès de couche physique en provenance d'entités MAC du côté du terminal pendant qu'un traitement d'accès de couche physique est en cours d'exécution dans la couche physique du côté du terminal, la couche physique du côté du terminal enregistre les demandes d'accès de couche physique et effectue les demandes d'accès de couche physique en fonction des informations de priorité d'accès à la fin du traitement d'accès ; ou la couche physique du côté du terminal envoie des informations de confirmation d'accès de couche physique directement aux entités MAC correspondantes du côté du terminal indiquant l'échec des demandes d'accès de couche physique ;
ou, si la couche physique du côté du terminal reçoit simultanément des demandes d'accès de couche physique en provenance de deux entités MAC du côté du terminal, la couche physique du côté du terminal traite les demandes d'accès de couche physique l'une après l'autre, dans lequel un type de demande d'accès de haute priorité est d'abord sélectionné en fonction d'informations de priorité d'accès des demandes d'accès de couche physique, et un traitement de synchronisation de liaison montante de couche physique est lancé pour la demande d'accès de couche physique de haute priorité puis un traitement de synchronisation de liaison montante de couche physique est lancé pour la demande d'accès de couche physique de basse priorité dans la sous-trame suivante ; si la couche physique du côté du terminal reçoit une ou plusieurs demandes d'accès de couche physique en provenance d'entités MAC du côté du terminal pendant qu'un traitement d'accès de couche physique est en cours dans la couche physique du côté du terminal, la couche physique du côté du terminal, en fonction d'informations de priorité d'accès, lance un traitement de synchronisation de liaison montante de couche physique l'un après l'autre pour les demandes d'accès de couche physique reçues.

7. Procédé de commande d'accès aléatoire fondé sur le système TD-SCDMA selon la revendication 6, **caractérisé en ce que**, entre l'étape 3 et l'étape 4, le procédé comprend en outre une étape à laquelle, lorsque l'accès de couche physique est réussi, l'entité MAC correspondante du côté du terminal envoie une demande d'envoi de données MAC à la couche physique du côté du terminal.

8. Procédé de commande d'accès aléatoire fondé sur le système TD-SCDMA selon la revendication 7, **caractérisé en ce que** la demande d'envoi de données MAC comprend au moins le type de la demande d'envoi de données MAC et les données MAC dont l'envoi est demandé.

9. Procédé de commande d'accès aléatoire fondé sur le système TD-SCDMA selon la revendication 8, **caractérisé en ce que**, entre l'étape 3 et l'étape 4, le procédé comprend en outre : la couche physique du côté du terminal reçoit des demandes d'envoi de données MAC en provenance respectivement de différentes entités MAC du côté du terminal ; puis traite les différents types de données MAC dont l'envoi est demandé par différents procédés de traitement de données MAC et envoie les données MAC reçues sur le même canal physique d'accès aléatoire ; ou envoie les différents types de données MAC reçues sur différents types de canaux physiques d'accès aléatoire sélectionnés en fonction des types de demande d'envoi de données MAC.

10. Procédé de commande d'accès aléatoire fondé sur le système TD-SCDMA selon la revendication 9, **caractérisé en ce que**, si la demande d'envoi de données MAC est une demande d'accès aléatoire commun de l'entité MAC-c/sh, l'envoi de données MAC est traité par le procédé de traitement avec un CRC normal ; et, si la demande d'envoi de données MAC est une demande d'accès aléatoire amélioré de liaison montante, l'envoi de données MAC est traité par le procédé de traitement avec un CRC d'ordre inversé.

11. Procédé de commande d'accès aléatoire fondé sur le système TD-SCDMA selon la revendication 9, **caractérisé en ce que**, si la demande d'envoi de données MAC est une demande d'accès aléatoire commun en provenance de l'entité MAC-c/sh, les données MAC sont envoyées sur un canal d'accès aléatoire physique sélectionné ; et, si la demande d'envoi de données MAC est une demande d'accès aléatoire amélioré de liaison montante, les données MAC sont envoyées sur un canal physique d'accès aléatoire amélioré de liaison montante sélectionné.

12. Procédé de commande d'accès aléatoire fondé sur le système TD-SCDMA selon la revendication 6, **caractérisé en ce que**, entre l'étape 3 et l'étape 4, le procédé comprend en outre : lors d'un échec de l'accès de couche physique, une étape de traitement d'échec correspondant est effectuée, à laquelle
si le nombre de fois que des demandes d'accès de couche physique sont envoyées par l'entité MAC du côté du terminal ne dépasse pas le nombre maximal, préconfiguré par le côté du réseau, de fois que des demandes d'accès sont envoyées, une demande d'accès de couche physique est reformulée ; sinon l'entité MAC du côté du terminal envoie des informations d'échec de traitement MAC à la couche supérieure de la commande de liaison radio.

13. Procédé de commande d'accès aléatoire fondé sur le système TD-SCDMA selon la revendication 1, **caractérisé en ce que** la demande d'accès de couche physique comprend au moins des informations de type de demande d'accès, des informations de priorité d'accès et des données MAC dont l'envoi est demandé.

14. Procédé de commande d'accès aléatoire fondé sur le système TD-SCDMA selon la revendication 13, **caractérisé en ce que** l'étape 3 comprend en outre une étape à laquelle la couche physique du côté du terminal traite respectivement chaque demande d'accès de couche physique en fonction de la quantité de demandes d'accès de couche physique reçues, d'informations de priorité des demandes d'accès de couche physique et de la situation de traitement des demandes d'accès de couche physique.

15. Procédé de commande d'accès aléatoire fondé sur le système TD-SCDMA selon la revendication 14, **caractérisé en ce que** l'étape 3 comprend en outre une étape à laquelle la couche physique du côté du terminal lance chaque fois un traitement de synchronisation de liaison montante de couche physique pour un type de demande d'accès sélectionné et effectue une opération en fonction du résultat du traitement de synchronisation de liaison montante.

16. Procédé de commande d'accès aléatoire fondé sur le système TD-SCDMA selon la revendication 15, **caractérisé en ce que**, en cas de réussite de la synchronisation de liaison montante, la couche physique du côté du terminal traite les différents types de données MAC dont l'envoi est demandé par différents procédés de traitement de données MAC et envoie les données MAC reçues sur le même canal physique d'accès aléatoire ; ou la couche physique du côté du terminal envoie les différents types de données MAC reçues sur différents types de canaux physiques d'accès aléatoire sélectionnés en fonction des types de demandes d'envoi de données MAC et envoie des informations relatives à la réussite d'accès de couche physique à l'entité MAC correspondante du côté du terminal ; en cas d'échec de la synchronisation de liaison montante, la couche physique du côté du terminal envoie des informations relatives à l'échec d'accès de couche physique à l'entité MAC correspondante du côté du terminal.
